# EUROPÄISCHE PATENTSCHRIFT

(11) **EP 0 920 968 B1**
(45) Veröffentlichungstag und Bekanntmachung des Hinweises auf die Patenterteilung: **16.08.2001**
(21) Anmeldenummer: 99104452.0
(22) Anmeldetag: 07.06.1995
(51) Int. Cl.: B29C 45/16

(54) **Vorrichtung zum Spritzgiessen**
Apparatus for injection moulding
Dispositif pour mouler par injection

(30) Priorität: 11.07.1994 US 272483
(43) Veröffentlichungstag der Anmeldung: 09.06.1999
(62) Teilanmeldung aus: 95108706.3
(73) Patentinhaber: Ferromatik Milacron Maschinenbau GmbH, D-79364 Malterdingen (DE)
(72) Erfinder: Jaroschek, Christoph Dr., 33619 Bielefeld (DE); Steger, Reinhard, 79104 Freiburg (DE); Gehring, Alexander, 79353 Bahlingen (DE); Bourdon, Karlheinz, Dr., 79276 Reute (DE)
(74) Vertreter: Röther, Peter, Dipl.-Phys.

(56) Entgegenhaltungen:
- FR-A- 2 204 499
- JAROSCHEK C: "NEUE WEGE BEIM SANDWICH-SPRITZGIESSEN" KUNSTSTOFFE, Bd. 83, Nr. 7, Juli 1993 (1993-07), Seiten 519-521, XP000372680 ISSN: 0023-5563

## Beschreibung

Die vorliegende Erfindung betrifft Spritzgießmaschinen und insbesondere Spritzgieß-Vorrichtungen zur Herstellung von mehrschichtigen Kunststoff-Artikeln mit einer Sandwich-Schichtkonfiguration.

### Stand der Technik

Das Sandwich-Spritzgießverfahren erlaubt die Herstellung von Kunststoffartikeln, deren Querschnitt eine drei-schichtige Konfiguration aufweist. Das äußere "Haut"-Material ist dabei das eine Material und die innere "Kern"-Struktur besteht aus einem anderen Material. Diese Konstruktion ist oft für dickwandige Komponenten benutzt worden, deren Kerne aus geschäumten Material bestehen, sowie in Anwendung, bei denen ein preiswertes Material für den Kern eines Artikels (als Ersatz für ein teueres Material) gebraucht werden kann, der spezieller Eigenschaften an der Oberfläche bedarf.

In letzter Zeit ist eine gestiegene Wertlegung auf Recycling festzustellen, die viele Spritzgießer veranlaßt hat, nach Wegen zur Verwendung von recycliertem Material zu suchen.

Das Sandwich-Spritzgieß-Verfahren kann in der Tat Recycling-Material als Kern-Material verwenden, da es noch adäquate physikalische Eigenschaften besitzt. Diese Konstruktion erhält ihren Vorteil durch die Tatsache, daß das äußere (Haut) Material relativ dünn ist, wodurch die Kosten des Spritzgieß-Artikels reduziert werden und der Anteil an jungfräulichem Material minimiert werden kann.

Vom Materialverarbeitungs-Gesichtspunkt wird die Sandwich-Konfiguration erreicht, wenn die beiden Materialien nacheinander in die Formkavität gefördert werden. Wenn die Materialien unter laminaren Fließbedingungen eingespritzt werden, beginnt die eingespritzte Schmelze unverzüglich zu verfestigen, wenn sie in Kontakt mit der Formwerkzeugwand gekommen ist, so daß die Schmelze in der Mitte der Strömung schneller vorwärts schreitet als die Schmelze in der Nähe der Wand.

Somit ersetzt Material, das später eingespritzt wird, Material, das früher eingespritzt worden ist, insbesondere in der Mitte des Fließquerschnitts, während die Schmelze, die die kalte Formwand berührt, zur Artikelform aushärtet und die Oberflächenschicht des Teils bleibt. Wenn der nachfolgende Schmelzestrom ein zweites Material aufweist, ist die Sandwich- oder Drei-Schicht-Konfiguration geschaffen.

Wegen des Erfordernisses der laminaren Strömung ist es nicht möglich, eine Sandwich-Konfiguration im Spritzgießverfahren herzustellen, in welcher beide Schmelzen zur selben Zeit in die Kavität eingebracht werden.

Simultane Einspritzung würde zu einer unakzeptablen Oberfläche führen, da das Kernmaterial die Wände der Formkavität berühren und sich mit dem Haut-Material der Oberfläche des Spritzgieß-Artikels vermischen würde. Um eine saubere Oberflächenschicht zu gewährleisten, wird das Haut-Material bei der Sandwich-Spritzgieß-Methode immer zuerst eingespritzt; dann folgt das Kern-Material mit kurzer zeitlicher Verzögerung. Die Einspritzüberlappung der beiden Materialien ist notwendig, um zu verhindern, daß die Schmelzefließfront augenblicklich stoppt, was zu Oberflächenfehlern ( sogenannten Bindenähten ) führen würde.

Bei diesem Typ der zeitlichen Abfolge ist es unerheblich, ob die Schmelzen in einer konzentrischen oder parallelen Düse zusammengeführt werden. In jedem Fall muß trotzdem das zweite (Kern-) Material der nachfolgende Schmelzestrom sein, der durch den Strömungsquerschnitt des zuerst eingespritzten Materials fließt, um die Sandwich-Konfiguration zu erreichen.

Typischerweise weisen die zur Herstellung der Sandwich-Konfiguration konzipierten Spritzgieß-Maschinen zwei Einspritz-Einheiten auf, die so gesteuert sind, daß die jeweiligen Materialkomponenten in der gewünschten Zeitabfolge in die Formkavität eingespritzt werden. Eine solche Spritzgieß-Maschine wird z.B. im Dokument FR-A-2 204 499 beschrieben. Maschinen dieses Typs weisen Nachteile wie die hohen Anfangskosten der benötigten Komponenten sowie die damit einhergehende Steuerungsfähigkeit für die gesamte Operationsüberwachung auf, um zu gewährleisten, daß der Volumenstrom des Materials durch die Düse in die Kavität konstant ist, wenn von Haut- zu Kern-Material gewechselt wird. In jüngster Zeit wurde entdeckt, daß das Sandwich-Molding-Verfahren nicht notwendigerweise erfordert, daß die beiden Schmelzen zu verschiedenen Zeiten mit Hilfe separater Einspritzzylinder eingespritzt werden müssen. Es ist auch möglich, die Schmelzen in einem einzigen Zylinder zu schichten und dann diese "gestapelte" Schmelze in einem einzigen Injektionsvorgang (Schuß) in die Kavität einzuspritzen. Dieses Verfahren des Sandwich-Molding hat den Vorteil, daß es erlaubt, den Einspritz-Prozeß in derselben Weise durchzuführen wie beim Standard-Spritzgieß-Verfahren (mit nur einem Material).

Die Vorrichtung zur Durchführung des Mono-Spritzgieß-Verfahrens soll typischerweise eine Standard-Spritzgießmaschine mit einer Haupt-Einspritz-Einheit aufweisen, die Kunststoffschmelze von einer oder mehreren zusätzlichen Plastifizier-Einheit(en) enthält. Die Übergabe des Haut- und Kern-Materials in die Haupt-Einspritz-Einheit erfolgt gesteuert, um einen vollständigen Schuß der beiden geschichteten Materialien in den gewünschten Proportionen zu erreichen. Für dieses Verfahren kann die zusätzliche Plastifizier-Einheit ein nicht hin- und herbeweglicher Schneckenextruder sein, welcher mit einer eine hin- und herbewegliche Einspritzschnecke aufweisenden Haupt-EinspritzEinheit verbunden ist.

Alternativ könnte die zusätzliche Einheit ( Hilfseinheit) eine zweite hin- hin- und herbewegliche Einspritzschnecke sein, wobei die Schnecke in üblicher Weise arbeitet, um Material in die Haupt-Einspritz-Einheit zu transportieren; oder zwei Extruder, die einen Einspritzsammelraum beschicken.

Die Aufgabe der vorliegenden Erfindung liegt darin, eine Vorrichtung von vereinfachter und ökonomischer Bauart anzugeben, die in der Lage ist, Artikel im Sandwich-Spritzgieß-Verfahren herzustellen.

Diese Aufgabe wird erfindungsgemäß dadurch gelöst, daß die Sandwich-Molding-Vorrichtung einen Speicherraum zur Förderung einer bestimmten Menge des Haut-Materials in die Form aufweist, sowie zur Ausführung der Pack- und Haltefunktionen des Einspritzzyklus. Insbesondere ist der Speicherraum über ein geeignetes Ventil mit dem Extruder verbunden, so daß eine bestimmte Menge des Haut-Materials sofort dann in den Speicherraum gefördert wird, wenn die erste Menge des Haut-Materials in den Schneckenzylinder der Einspritz-Einheit gefördert worden ist. Sobald das Ventil schaltet, um den Speicherraum zu füllen, beginnt die Einspritzeinheit die gewünschte Menge des Kernmaterials zu plastifizieren. Der Speicherraum ist mit Hilfe geeigneter Mittel mit dem Einspritzkanal der Formkavität verbunden, so daß, nachdem die Einspritzeinheit die Formkavität mit der ersten Ladung gefüllt hat, der Speicherraum eine kleine Menge von Haut-Material fördern kann, um sicherzustellen, daß das Kern-Material vollständig vom Haut-Material umschlossen ist und daß die Kavität vollständig gefüllt ist. Das angeschlossene Ventil erlaubt darüber hinaus, daß der Speicherraum (Akkumulator) den gewünschten Druck auf das Material der Form aufrechterhält, während gleichzeitig die Einspritzeinheit in die Lage versetzt wird, Haut-Material vom Extruder für den nächsten Einspritzzyklus zu erhalten.

Die Erfindung wird im folgenden anhand von Zeichnen dargestellt und erläutert.

Es zeigen:
- Fig. 1:: zeigt einen schematischen Schnitt durch eine Ausführungsform der Erfindung mit einer Haupteinspritzeinheit, einer zusätzlichen Plastifiziereinheit und einem Speicherraum,
- Fig. 2:: zeigt schematisch einen Schnitt durch den Speicherraum und das angeschlossene Ventil in zur Fig. 1 vergrößerter Darstellung.

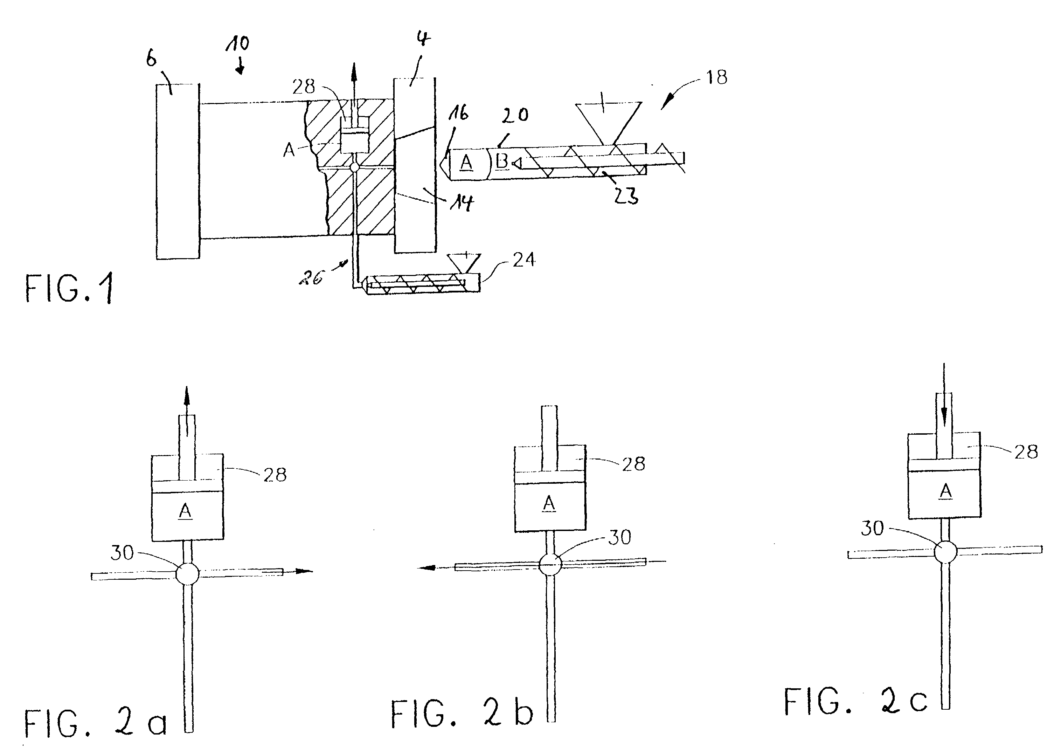

Die Figur 1 zeigt ein zweiteiliges Formwerkzeug 10 mit einer Formkavität zur Aufnahme von geschmolzenem Kunststoffmaterial aus einer Einspritzeinheit 18, um einen Kunststoffartikel mit einer Sandwich-Konfiguration herzustellen. Die beiden Teile des Formwerkzeugs 10 sind an einer stationären Platte 4 und einer beweglichen Form-aufspannplatte 6 montiert. Die stationäre Formaufspannplatte 4, die bewegliche Formaufspannplatte 6 und die Einspritzeinheit 18 sind auf einem gemeinsamen Maschinenbett angeordnet. Die Formwerkzeugkonstruktion weist einen Angußkanal 14 auf, welcher mit einer Düse 16 an der Einspritzeinheit 18 verbunden ist, wenn Material in die Formkavität eingespritzt wird. Die Düse 16 ist mit einer Rückströmsperre (nicht dargestellt ) von bekannter Art ausgerüstet.

Die Haupt-Einspritzeinheit 18 weist einen Zylinder auf, mit einer Förderschnecke 23 von beim Spritzgießen typischer Art. Die Förderschnecke 23 ist so gesteuert, daß sie im Zylinder 20 hin- und herbewegbar ist, um den Kunststoff zu plastifizieren und ihn in die Form 10 einzuspritzen. Die Einspritzeinheit 18 ist mit Mitteln ausgestattet wie zum Beispiel mit einem hydraulischen Zylinder ( nicht dargestellt ), um die Einheit linear auf die Form 10 zuzubewegen bzw. sie von dieser wegzubewegen. Eine zusätzliche Plastifiziereinheit 24 ist neben der Einspritzeinheit 18 montiert. Angeschlossen an das Ende der zusätzlichen Plastifiziereinheit 24 ist ein Heißkanalverteiler 26.
Das Hauptmerkmal dieser Ausführungsform ist die Hinzufügung eines Speicherraumes 28 und eines Strömungsregelungsventils 30. Das Ventil 30 in Verbindung mit geeigneten Leitungen ermöglicht die Verbindung des Speicherraumes 28 mit der zusätzlichen Plastifiziereinheit 24 und der Formkavität über den Angußkanal 14.

Der Speicherraum 28 hat die Funktion, eine gewisse Menge von Haut-Material in die Form 10 nach dem Einspritzen des geschichteten Materials durch die Haupt-Einspritzeinheit 18 zu fördern. Zusätzlich kann der Speicherraum 28 dazu benutzt werden, die Pack- und Haltefunktionen am Ende des Einspritzzyklus zu erfüllen, wodurch eine größere Flexibilität in der Aufeinanderfolge der Elemente des Einspritzzyklus ermöglicht ist. In der Vorbereitung zur Ausführung der gewünschten Funktionen wird Haut-Material in den Speicherraum 28 durch die zusätzliche Einheit 24 gefördert, nachdem die gewünschte Menge des Haut-Materials in die Einspritzeinheit 18 gefördert worden ist. Insbesondere nach dem vollständigen Materialtransfer in die Einspritzeinheit 18 wird das Ventil 30 betätigt, um einen Materialfluß von der zusätzlichen Einheit 24 zum Speicherraum 28 herzustellen. Sobald die Förderung des Haut-Materials zum Speicherraum 28 beendet ist, kann die Einspritzeinheit 18 damit beginnen, die gewünschte Menge Kern-Material zu plastifizieren. Alternativ, wenn das Zyklustiming es erlaubt, könnte der Materialtransfer in den Speicherraum 28 gleichzeitig mit der Förderung in die Einspritzeinheit 18 stattfinden oder, mit Hilfe eines geeigneten Ventil, könnte die Förderung verzögert werden, so daß das Haut-Material in den Speicherraum 28 durch die Einspritzeinheit 18 gleichzeitig mit der Einspritzung in die Form gefördert wird. Im letzteren Fall ist es wichtig, die Flußrate in den Speicherraum 28 zu regeln, um das gewünschte Einspritzdruckprofil an der Form aufrechtzuerhalten.

Wie oben bereits ausgeführt, ist der Speicherraum 28 ebenfalls mit der Formkavität verbunden. Nachdem die Einspritzeinheit 18 die erste Ladung von Haut- und Kern-Material eingespritzt hat, um die Formkavität 10 zu füllen, wird das Ventil 30 betätigt, um die notwendige Verbindung aufzubauen, und der Speicherraum 28 übernimmt nun die Funktion, die Formkavität mit einer kleinen Ladung von Haut-Material zu packen. Diese letzte Einspritzung durch den Speicherraum 28 gewährleistet nicht nur, daß die Formkavität einen voll ausgeformten Artikel beeinhaltet, sondern ebenfalls, daß das Kern-Material vollständig durch das Haut-Material umschlossen ist. Die Funktion des Speicherraums 28 dauert auch nach der Einspritzung an, indem der Forminnendruck aufrechterhalten wird, während der gespritzte Artikel abkühlt. Da der Druck durch den Speicherraum 28 gehalcen wird, ist die Einspritzeinheit 18 wieder frei für den Empfang von Haut-Material von der zusätzlichen Einheit zur Vorbereitung des nächsten Arbeitszyklus.

Während die Erfindung im Detail gemäß der bevorzugten Ausführungsform in den beigefügten Zeichnungen dargestellt ist und während verschiedene Formen der bevorzugten Ausführungsform im Detail beschrieben worden sind, versteht es sich, daß die Erfindung nicht auf diese Details beschränkt ist. Im Gegenteil beinhaltet die Erfindung alle Modifikationen, Veränderungen und Äquivalente, welche unter den Umfang des folgenden Anspruchs fallen.

## Patentansprüche

1. Vorrichtung zum Spritzgießen eines Kunststoffartikels in einer Formkavität, wobei der spritzgegossene Artikel eine Sandwich-Schichtkonfiguration aufweist, die eine äußere Oberfläche eines Haut-Materials aufweist, das ein inneres Kern-Material umgibt, mit einer Haupt-Einspritzeinheit (18), die eine hin- und herbewegbare Förderschnecke zur Plastifizierung des Kern-Materials aufweist, einer zusätzlichen Einheit (24) zum Plastifizieren des Haut-Materials, einem Heißkanalverteiler (26), der mit der zusätzlichen Einheit (24) verbunden ist, einem Speicherraum (28), Mitteln zur Verbindung des Heißkanalverteilers (26) mit der Haupt-Einspritzeinheit (18) und dem Speicherraum (28) und Mitteln zur Verbindung der Haupt-Einspritzeinheit (18) und des Speicherraums (28) mit der Formkavität, so daß das Haut-Material von der zusätzlichen Einheit (24) zur Haupt-einspritzeinheit (18) und dem Speicherraum (28) gefördert werden kann, und sowohl die Haupt-Einspritzeinheit (18) als auch der Speicherraum (28) Material in die Formkavität einspritzen kann.

## Claims

1. A device for injection moulding an article of plastics material in a mould cavity, wherein the injection-moulded article has a sandwich-layer configuation which has an outer surface of a skin material which surrounds an inner core material, with a main injection unit (18) comprising a reciprocating conveying worm for plasticizing the core material, an additional unit (24) for plasticizing the skin material, a hot-runner distributor (26) connected to the additional unit (24), a reservoir chamber (28), means for connecting the hot-runner distributor (26) to the main injection unit (18) and the reservoir chamber (28), and means for connecting the main injection unit (18) and the reservoir chamber (28) to the mould cavity, so that the skin material can be conveyed from the additional unit (24) to the main injection unit (18) and the reservoir chamber (28), and both the main injection unit (18) and the reservoir chamber (28) can inject material into the mould cavity.

## Revendications

1. Dispositif pour le moulage par injection d'un article en matière plastique dans une cavité de moule, l'article moulé par injection présentant une configuration stratifiée en sandwich qui comporte une surface extérieure d'une matière de peau, laquelle entoure une matière intérieure de coeur, dispositif comprenant une unité principale d'injection (18) qui comporte une vis d'alimentation mobile en va-et-vient pour la plastification de la matière de coeur, une unité supplémentaire (24) pour la plastification de la matière de peau, un répartiteur à canaux chauffants (26) qui est relié à l'unité supplémentaire (24), un espace d'accumulation (28), des moyens pour relier le répartiteur à canaux chauffants (26) à l'unité principale d'injection (18) et à l'espace d'accumulation (28), et des moyens pour relier l'unité principale d'injection (18) et l'espace d'accumulation (28) à la cavité de moule, de sorte que la matière de peau peut être refoulée par l'unité supplémentaire (24) vers l'unité principale d'injection (18) et vers l'espace d'accumulation (28), et aussi bien l'unité principale d'injection (18) que l'espace d'accumulation (28) peuvent injecter de la matière dans la cavité de moule.
